# EUROPÄISCHE PATENTANMELDUNG

(11) **EP 1 887 220 A2**
(43) Veröffentlichungstag der Anmeldung: **13.02.2008**
(21) Anmeldenummer: 07405213.5
(22) Anmeldetag: 23.07.2007
(51) Int. Cl.: F03D 3/02, F03D 3/04, F03D 3/06

(54) **Windkraftanlage mit senkrechter Rotationsache**

(30) Priorität: 25.07.2006 CH 12012006
(71) Anmelder: Hasler, Jakob, 3110 Münsingen (CH)
(72) Erfinder: Hasler, Jakob, 3110 Münsingen (CH)

(57) **Zusammenfassung**

Die Windkraftanlage mit senkrechter Rotationsachse besteht aus einer Windturbine (1) und einem Turbinensockel (2), mit welchem die Windkraftanlage am Boden montiert ist und in welchem gleichzeitig die Einrichtungen für die Umformung der Rotationsenergie in z.B. elektrische Energie sowie für Steuerung und Kontrolle des Systems untergebracht sind. Die Windkraft wird über sich im Wind selbständig aufrichtende Rotorlamellen (6) aufgenommen, welche auf der scheibenförmigen Rotorbasis (5) montiert sind. Zusammen bilden Rotorlamellen und Rotorbasis den Turbinenrotor (4). Eine Windturbine (1) besteht aus mindestens einem Turbinenrotor.

## Beschreibung

Die Erfindung betrifft eine Windkraftanlage mit senkrechter Rotationsachse.

Die Konstruktion bringt gegenüber dem heutigen Stand der Technik - grösstenteils Rotoren mit drei Flügeln und horizontaler Rotationsachse - erhebliche Vorteile:
a) Dreiflügler benutzen vom gesamten überstrichenen Rotationskreis für die Aufnahme der Windkraft weniger als 10%, was in etwa der pro Zeiteinheit wirksamen Gesamtfläche der drei Flügel im Verhältnis zur Fläche des Rotationskreises entspricht. Demgegenüber ist die Windkraftanlage gemäss Patentanspruch 1 in der Lage, bis zu 50% der gegen den Wind exponierten Fläche zu nutzen. Der Wirkungsgrad kann also theoretisch bereits bis fünf mal grösser sein.
b) Herkömmliche Anlagen mit horizontaler Rotationsachse müssen, um optimal wirksam zu sein, auf die jeweilige Windrichtung ausgerichtet werden, was je nach Grösse der Anlage nur mit einer erheblichen zeitlichen Verzögerung möglich ist. Ausserdem eignet sich diese Bauform generell schlecht für auf-und abflauende oder gar böige Winde. Die Windkraftanlage gemäss Patentanspruch 1 ist demgegenüber in der Lage, dank der senkrechten Rotationsachse Winde aus beliebigen Richtungen unmittelbar zu verwerten und kann auch böige Winde problemlos nutzen.
c) In herkömmlichen Dreiflüglern mit horizontaler Rotationsachse müssen die Systeme zur Umsetzung der Rotationsenergie in elektrische Energie in Gondeln in luftiger Höhe montiert werden, während in der Windkraftanlage gemäss Patentanspruch 1 die gesamten Einrichtungen zur Energieumformung sowie für die Steuerung und Kontrolle im Turbinensockel am Boden befestigt sind, was erhebliche Einsparungen in der gesamten Statik der Konstruktion mit sich bringt.

Die Windkraftanlage mit den Merkmalen des Anspruchs 1 zeichnet sich dadurch aus, dass eine an einer senkrechten Rotationsachse angeordnete Windturbine (1), bestehend aus 1 bis n Turbinenrotoren (4) beliebiger Grösse und einer beliebig langen Turbinenachse (3), die Windkraft aufnimmt und in Rotationsenergie umsetzt. Die Rotationsachse ihrerseits ist frei drehend im Turbinensockel (2) montiert, in welchem vorteilhafterweise ausser den Einrichtungen zur Umsetzung der Rotationsenergie in beliebig andere Energieformen (z.B. elektrische Energie, Wärme, Bewegung) auch alle notwendigen Steuer- und Kontrolleinrichtungen untergebracht sind. Die Turbinenrotoren (4) bestehen aus einer Rotorbasis (5), auf welcher ein- oder doppelseitig eine beliebige Anzahl Rotorlamellen (6) sternförmig angeordnet und auf jeweils einer Längsseite fest mit der Rotorbasis (5) verbunden sind. Nach einer vorteilhaften Ausgestaltung der Erfindung ist die Rotorbasis scheibenförmig. Nach einer weiteren vorteilhaften Ausgestaltung der Erfindung ist die Rotorbasis kreisförmig. Steht die nicht fixierte Seite einer Rotorlamelle (6) dem Wind entgegen, richtet sie sich aufgrund ihrer Biegsamkeit automatisch auf und nimmt über die entstandene Fläche entsprechend Windkraft auf. Die punktsymmetrisch gegenüber liegende Rotorlamelle (6) ist auf der gegen den Wind stehenden Seite auf der Rotorbasis (5) fixiert, kann sich somit nicht aufrichten und demzufolge auch (fast) keine Windkraft aufnehmen. Die Differenz der beidseitig der Turbinenachse (3) aufgenommenen Windkraft erzeugt ein Drehmoment, welches die Windturbine (1) in Rotation versetzt.

Nach einer weiteren vorteilhaften Ausgestaltung der Erfindung besteht die Rotorbasis (5) aus einem beliebigen, für diesen Zweck geeigneten Material. Hierzu zählen beispielsweise Kunststoff, Metall oder Verbundmaterialien. Ferner kann die Rotorbasis eine beliebige, für diesen Zweck geeignete Form und Struktur aufweise.

Nach einer weiteren vorteilhaften Ausgestaltung der Erfindung sind die Rotorlamellen (6) einerseits biegsam genug, um sich, dem Wind entgegengestellt, automatisch aufrichten zu können, gleichzeitig aber steif genug, um auch von starken Windböen nicht überdehnt oder geknickt zu werden.

Nach einer weiteren vorteilhaften Ausgestaltung der Erfindung bestehen die Rotorlamellen (6) aus einem beliebigen, für diesen Zweck geeigneten Material. Sie weisen eine beliebige, für diesen Zweck geeignete Profilierung, Form und Struktur auf.

Nach einer weiteren vorteilhaften Ausgestaltung der Erfindung sind die Rotorlamellen auf der Ober- und Unterseite der Rotorbasis (5) gegeneinander versetzt befestigt. Sie bilden beim Aufrichten im Wind ein "reissverschlussartig" ineinander greifendes Windsegel und gewährleisten damit ein maximales Aufnehmen der Windkraft.

Nach einer weiteren vorteilhaften Ausgestaltung der Erfindung sind die Rotorlamellen (6) starr und in einer fixen Position an der Rotorbasis angeordnet. In diesem Fall wird die Konstruktion zwar einfacher, aber der Wirkungsgrad gleichzeitig kleiner.

Nach einer weiteren vorteilhaften Ausgestaltung der Erfindung sind die Rotoren zum Ausgleich von einseitigen Torsionskräften gegenläufig an der Rotationsachse angeordnet.

Nach einer weiteren vorteilhaften Ausgestaltung der Erfindung wird die Windkraftanlage in jeder beliebigen Lage ausser der senkrechten betrieben.

Nach einer weiteren vorteilhaften Ausgestaltung der Erfindung wird die Windkraftanlage auch für die Nutzung von Wasserkraft oder beliebig anderen strömenden Medien verwendet.

Ein Ausführungsbeispiel der Erfindung ist in den Zeichnungen dargestellt. Es zeigen:

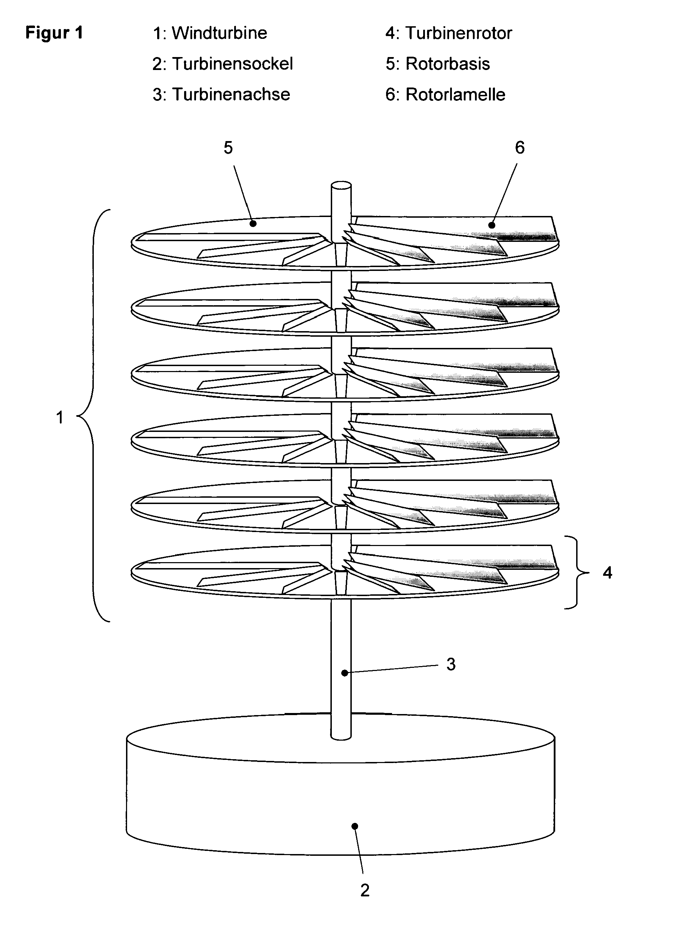

**Figur 1:** Eine mögliche Ausführung der Windkraftanlage gemäss Patentanspruch 1. Die abgebildete Windturbine 1 besteht aus sechs Turbinenrotoren 4 und ist frei drehend im Turbinensockel 2 montiert. Die Rotorlamellen 6 sind in diesem Beispiel nur auf der Oberseite der Rotorbasis 5 befestigt. Die Blickrichtung entspricht der Richtung, aus welcher der Wind bläst.

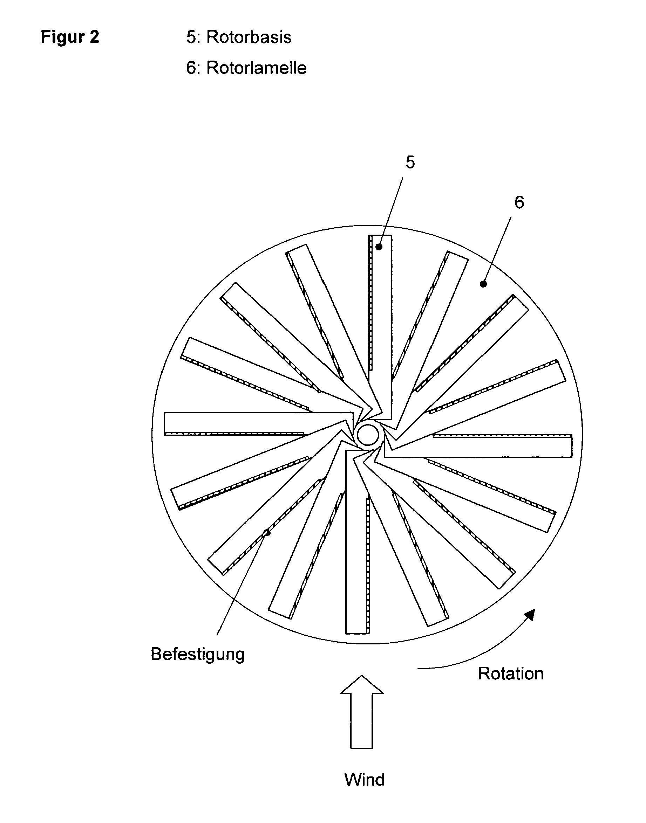

**Figur 2:** Die Windkraftanlage aus Figur 1 von oben betrachtet. Sichtbar ist der oberste der sechs Turbinenrotoren 4 mit den in diesem Beispiel total 16 Rotorlamellen 6. Bläst der Wind in gezeigter Richtung, dreht die Windturbine 1 im Gegenuhrzeigersinn.

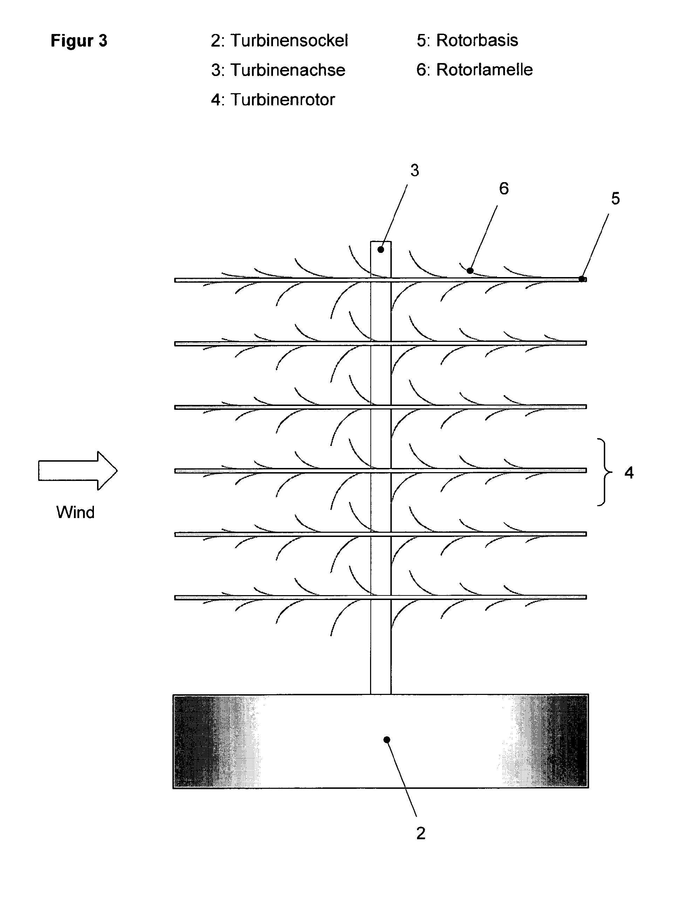

**Figur 3:** Eine Windkraftanlage gemäss Patentanspruch 1 mit sechs Turbinenrotoren 4 aus seitlicher Blickrichtung. Diesmal sind die Rotorbasen 5 oben und unten mit Rotorlamellen 6 bestückt. Bei der gezeigten Versetzung der Rotorlamellen 6 zwischen Ober- und Unterseite ergibt dies mit den sich im Wind aufrichtenden Rotorlamellen 6 ein "reissverschlussartig" ineinander greifendes Windsegel und damit eine maximale Aufnahme der Windkraft aus gezeigter Richtung.

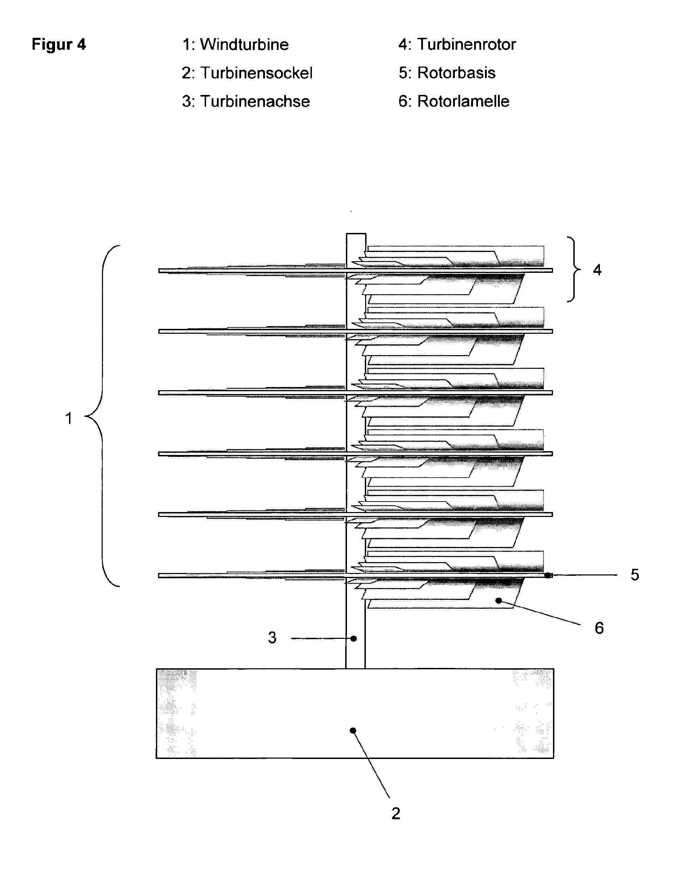

**Figur 4:** Die Windkraftanlage aus Figur 3 aus der selben Richtung, aus der der Wind bläst. Gut sichtbar sind dabei die auf der rechten Seite der Turbinenachse gegen den Wind stehenden Rotorlamellen 6 wie sie sich aufrichten und dabei eine grosse Segelfläche bilden, währen die links von der Rotorachse mit dem Wind sich niederlegenden Rotorlamellen 6 praktisch flach auf der Rotorbasis 5 aufliegen und dem Wind somit nur eine sehr kleine Angriffsfläche bieten.

## Patentansprüche

1. Windkraftanlage
mit einem Sockel (2) zur Verankerung der Windkraftanlage im Boden,
mit einer relativ zum Sockel (2) senkrecht ausgerichteten Rotationsachse (3), welche drehbar mit dem Sockel (2) verbunden ist,
mit mindestens zwei an der Rotationsachse angeordneten Rotoren (4), welche von der strömenden Luft in Drehung versetzt wird,
mit einer Rotorbasis (5) eines jeden Rotors (4),
mit mehreren an der Rotorbasis (5) sternförmig angeordneten
Rotorlamellen (6).

2. Windkraftanlage nach Anspruch 1, **dadurch gekennzeichnet, dass** die Rotorbasis (5) an der dem Sockel (2) zugewandten Seite und an der dem Sockel (2) abgewandten Seite mit Rotorlamellen (6) ausgestattet ist.

3. Windkraftanlage nach Anspruch 2, **dadurch gekennzeichnet, dass** die Rotorlamellen (6) versetzt an der Rotorbasis (5) angeordnet sind.

4. Windkraftanlage nach einem der vorhergehenden Ansprüche, **dadurch gekennzeichnet, dass** die Rotorlamellen (6) mit einer in radialer Richtung verlaufenden Seite fest mit der Rotorbasis (5) verbunden sind und mit ihren übrigen Seiten in der Ausgangsposition lose an der Rotorbasis (5) anliegen.

5. Windkraftanlage nach Anspruch 4, **dadurch gekennzeichnet, dass** die Rotorlamellen (6) aus einem elastischen Material bestehen, welches sich unter Einwirkung der Windkraft auf die Rotorlamellen (6) verformt und nach Wegfall der Windkraft wieder in seine Ausgangsform zurückkehrt.

6. Windkraftanlage nach einem der Ansprüche 1 bis 3, **dadurch gekennzeichnet, dass** die Rotorlamellen (6) aus einem starren Material bestehen und an mindestens zwei Seiten fest mit der Rotorbasis (5) fest verbunden sind, dass die Rotorlamellen (6) mit der durch die Rotorbasis (5) gebildeten Ebene einen Winkel von mindestens 15° einschliessen.

7. Windkraftanlage nach einem der vorhergehenden Ansprüche, **dadurch gekennzeichnet, dass** die Rotorlamellen (6) mindestens eines Rotors (4) geläufig zu den Rotorlamellen (6) der anderen Rotoren (4) angeordnet sind.

8. Windkraftanlage nach einem der vorhergehenden Ansprüche, **dadurch gekennzeichnet, dass** in dem Sockel (2) Einrichtungen zur Umformung der kinetischen Energie der Rotationsachse (3) in andere Energieformen angeordnet sind.

9. Windkraftanlage nach einem der vorhergehenden Ansprüche, **dadurch gekennzeichnet, dass** die Rotorbasis (5) als Scheibe ausgebildet ist.

10. Windkraftanlage nach einem der vorhergehenden Ansprüche, **dadurch gekennzeichnet, dass** die Rotationsachse länger ist als der Sockel.
